# EUROPEAN PATENT APPLICATION

(11) **EP 4 075 257 A1**
(43) Date of publication of application: **19.10.2022**
(21) Application number: 21168524.3
(22) Date of filing: 15.04.2021
(51) Int. Cl.: G06F 3/14, G09G 3/32, G09G 3/20, G09G 5/00

(54) **LED MODULE, CONTROL UNIT, LED MODULE ARRANGEMENT AND METHODS**

(71) Applicant: Vestel Elektronik Sanayi ve Ticaret A.S., 45030 Manisa (TR)
(72) Inventor: KURALAY, Fatih, 45030 Manisa (TR)
(74) Representative: Kehl, Ascherl, Liebhoff & Ettmayr Patentanwälte Partnerschaft mbB

(57) **Abstract**

The present disclosure provides a LED module (1) comprising a plurality of LEDs (2) and a housing (3) for the LEDs (2), further comprising a connector (4) configured to receive control signals from a control unit (300) to control the LEDs (2), whereas the connector (4) is connected to the LEDs (2) such that the received control signals are executable by the LEDs, whereas the LED module (1) comprises means (5, 6, 7, 8) to detect an orientation (O1, O2) of the LED module (1), whereas the LED module (1) is configured to be operated dependent on the orientation (O1, O2) of the LED module (1), whereas the means (5, 6, 7, 8) to detect the orientation (01,02) of the LED module (1) are comprised by the connector (4).

## Description

### TECHNICAL FIELD

The disclosure relates to a LED module, a control unit for a LED module, a LED module arrangement, a method for operating a LED module and a method for assembling a LED module arrangement.

### BACKGROUND

Although applicable to any technical field to which LED modules can be applied, the present disclosure will mainly be described in conjunction with large displays.

Light Emitting Diodes (LEDs) are used for a variety of applications, especially for lighting or display applications. For such applications, a plurality LEDs are typically grouped in LED modules and arranged in suitable manner for a specific application. To create such light source arrangements or display arrangements a plurality of LED modules is arranged next to each other.

Large displays (e. g. billboards), such as those commonly used for advertising in cities and along roads, are widely used to display an image, a video, or a text. The graphics may be provided on a single LED module or can extend across multiple LED modules.

Each LED module may have an array of LEDs or array of LED packages to generate the visual graphics. The LED modules may be conventional modules made using discrete LEDs or surface mounted device (SMD) modules. However, also screens that are built around discrete LEDs, which are also known as individually mounted LEDs, can be used.

In a typical large display with multiple LED modules, each LED module displays a segment or a portion of an image, which - when combined - form the complete image. Generally, when the display is installed a manual intervention is required to configure each LED module to properly display the corresponding segment in accordance with the modules' spatial configuration.

Likewise, during a LED module replacement or a LED module upgrade, the individual LED module, and in some cases the entire display, may need to be reconfigured to properly display the corresponding segment. These manual configurations increase installation time, cost, and labor. A less manual process is advantageous.

US 20190265939 A1 discloses a respective method and modular display system. The presented method for configuring a modular display system includes attaching a panel to form the modular display system having a display area and initiating, by the panel in the modular display system, a configuration of the panel in response to the attaching. In this embodiment, the configuration of the panel includes panel orientation, panel resolution, panel vertical and horizontal pixel information, or panel spatial configuration in the modular display system. It is further disclosed that sensors, such as an accelerometer, a tilt sensor, a gyroscope, or a magnetometer, e.g. magnetic field sensor or geomagnetic field sensor, may be used to determine panel orientation. In some other embodiments, an automatic mechanical switch or a manual switch, for example located at the panel edge, may be automatically or manually activated and used to determine panel orientation.

The prior art realizes such configuration by utilizing specific additional sensors or mechanical switches, whereas the latter may comprise still manual intervention. In addition, no identical LED modules are used to build a display.

Typically, different types of LED modules are used to built up a large display. Often there are LED modules to need to be arranged in a certain position of the large display to make the display work. This means there is a certain variety of different LED modules that must be installed in correct manner to make certain arrangement of LED modules work. In consequence also a plurality of differently configured LED modules needs to be manufactured.

Accordingly, there is a need for building displays or light sources or other devices comprising LED modules with identical LED-modules.

It is object of the invention to provide an LED module, an LED arrangement, a control unit and methods for facilitating the installation of LED arrangements.

### SUMMARY

The above stated problem is solved by the features of the independent claims. It is understood that independent claims of a claim category may be formed in analogy to the dependent claims of another claim category.

Further embodiments of the present disclosure are subject of the further dependent claims and of the following description, referring to the drawings.

Accordingly it is provided an LED module comprising a plurality of LEDs and a housing for the LEDs, further comprising a connector configured to receive control signals to control the LEDs from a control unit, whereas the connector is connected to the LEDs such that the received control signals are executable by the LEDs, whereas the LED module comprises means to detect an orientation of the LED module, whereas the LED module is configured to be operated dependent on the orientation of the LED module, especially detected by the control unit, whereas the means to detect the orientation of the LED module are comprised by the connector, especially whereas the connector comprises means providing an orientation parameter associated with the orientation of the LED module.

Such LED module is enabled to be used in different orientations when used as module for a larger display or lighting applications, especially in a first orientation and in an 180° turned second orientation and solves the object of the invention.

By providing the means for detecting the orientation of the LED module as part of the connector an easy and reliable solution is provided to determine the orientation of the LED module. Means comprised by the connector shall be understood such than an element of the connector is specifically designed to provide information on the orientation of the LED module, especially relative to a connector of a control unit pluggable into the connector of the LED module. The orientation of the LED module can be automatically detected as soon as the control unit is connected with the connector of the LED module.

LED shall be understood to comprise all types of LEDs, like organic LEDs (OLEDs), edge emitting LEDs (ELEDs), chip on board (COB) and multiple chip on board MCOB type LEDs, etc.

In an exemplary embodiment the connector of the LED module comprises as means to detect the orientation a pin configuration configured to represent an orientation of the LED module, especially by a control unit connectable to the connector. Such pin configuration is advantageous as the connector is typically connected via respective pins having different functions with which the control unit can control the LED module. By using a pin configuration, a number different orientations of the LED module can be differentiated depending on the chosen pin configuration. As the pin configuration is comprised by the connector the module does not need to comprise additional components, like additional sensors or switches.

In a further embodiment of the LED module, the pin configuration comprises a first pin and a second pin, whereas the first and the second pin are arranged point symmetric to a connector center, whereas the first pin and the second pin are configured to be distinguishable by the control unit, especially the first pin and the second pin differ in electric parameters, that enable the control unit to detect an orientation of the LED module. This provides an easy way to differentiate two orientations relative to a connector a control unit. Dependent on the position of the first and second pin within the connector, the control unit can determine, if the LED module is oriented in a first orientation, e.g. 0°, and a second orientation, e.g. 180°, relative to a connector of a control unit. The first orientation might also be described as upward orientation and the second orientation might also be described as a downward orientation of the LED module, or vice versa.

In a further advanced embodiment, the LED module comprises a voltage source, whereas the voltage source is electrically connected to the first pin and whereas the second pin is electrically grounded. This enables the connector to provide an easy detectable orientation parameter of the connector relative to the connector of the control unit; the first energize pin might also be called rotation pin, as this pin provides information, based on its position in the connector relative to the connector of a control unit, if the LED module is oriented in a first orientation or in a second orientation. The first pin connected with the voltage source can provide a logic high pin value whereas the grounded pin can provide a logic low pin value enabling a control unit to detect an orientation of the LED module based on the sensed pin value.

In another exemplary embodiment the connector of the LED module is placed such on the LED module that by turning the LED module from a first orientation to a second orientation which is the first orientation plus 180°, whereas the turning takes place around a center axis parallel to a light emitting direction of the LED module, the position of the connector in the first orientation and in the second orientation can be arranged mirror symmetrically. The center axis runs through the center of the LED module and is perpendicular to a LED module plane in which the LEDs are placed. This center axis is therefore parallel to a light emitting direction of the LEDs. This configuration allows to use the same LED module, e.g. for a left and right arrangement relative to a mounting axis of a cabinet, e.g. for building a larger display, without the need of different LED modules. Such mounting axes can be the middle axes of the cabinet dividing the module in an upper half and a lower half, respectively to a left half and a right half. The LED modules can be connected to the control unit without further adaption of the LED modules or of the control unit required, which can then form a LED module arrangement together. This means only one kind of LED modules need to be manufactured which significantly decreases the costs as only one kind of LED module is needed to create e.g. a large display

The object is also solved by a control unit for a LED module, especially according to one of the claims 1 to 5, whereas the control unit is configured to detect a orientation of the LED module by detecting an orientation parameter of the connector of the LED module, whereas the control unit is configured to load a first configuration setup for a LED module arranged in a first orientation and to load a second configuration setup for a LED module arranged in a second orientation, whereas the control unit is configured to assign the first or second configuration setup to the LED module according to the detected orientation of the LED module, whereas the control unit is configured to operate the LED module according to the assigned configuration setup dependent on the detected orientation of the LED module.

As orientation parameter of the connector a detectable parameter of the connector is understood specifically related to the connector providing information on the orientation of the connector, e.g. the arrangement of a pin configuration of the connector relative to a connector of a control unit.

Especially such control unit can be a control unit for a first and second LED module, especially the first and second LED module being a LED module according one of the claims 1 to 5, whereas the control unit is configured to detect a first orientation of the first LED module and a second orientation for the second LED module by detecting an orientation parameter of the first connector of the first LED module and an orientation parameter of the second connector for the second LED module, especially when connected to the first and/or second LED module, whereas the control unit is configured to load a first configuration setup for a LED module arranged in a first orientation and to load a second configuration setup for a LED module arranged in a second orientation, whereas the control unit is configured to assign the first and second configuration setup to the first and second LED module according to the detected orientation of the first and second LED module, whereas the control unit is configured to operate the first and second LED module according to the assigned first and second configuration setup dependent on the detected orientation of the first and second LED module.

Such control unit provides the possibility to control a LED module, especially a first LED module and a second LED module, dependent on its respectively their orientation such, that a content of a display is represented correctly without configuring each LED module separately. Instead, the control unit automatically detects via means for detecting an orientation comprised by the connector the orientation of the respective LED module and loads and assigns a configuration setup fitting the that orientation of the LED module.

This is an easy and modular way to configure e.g. a large display. The control unit can be enabled to control a plurality of first and second LED modules, especially whereas all first LED modules are oriented in a first direction and all second LED modules are oriented in a second orientation, especially turned 180° to the first orientation.

The first and the second configuration setup can be stored in a memory and loaded when the control unit is connected to the LED module or LED modules. Based on the detected orientation of the LED module or modules the configuration setup is assigned to the respective LED module or modules. In case a LED module is arranged in a first orientation, e.g. in an upward orientation, the configuration setup for such orientation, the upward orientation, is assigned to the LED module and the LED module is operated according the first configuration setup, e.g. the upward configuration. In case a LED module is arranged in a second orientation, e.g. in an downward orientation, the configuration setup for such orientation, the downward orientation, is assigned to the this LED module and the this LED module is operated according to the second configuration setup, e.g. the downward configuration. The number of available configuration setups corresponds typically with number of possible orientations of LED modules in cabinet for building e.g. a display. When LED modules are e.g. only in a 0° orientation relative to the connector of the control unit and only in a 180° orientation relative to the connector of the control unit, only two configuration setups corresponding to these orientations may be needed.

In a further embodiment the control unit comprises a plug-in connector, especially a first plug-in connector and a second plug-in connector, which is directly connectable to the connector of the LED module, respectively are directly connectable to the connector of the first LED module and to the connector of the second LED module.

Directly connectable means that the plug-in connector of the control unit and the connector of the LED module are directly in touch with each other, e.g. no cable connection between the connector of the LED module and the connector of the control unit. The plug-in connectors of the control unit position fix connectors of the control unit that are configured to be directly plugged into to connector of a LED module, especially a first and a second LED module as part of a LED module arrangement. Such plug-in connector can be male type or female type. The control unit can comprise a at least one plug-in connector, especially a plurality of plug-in connectors, e.g. 2, 4, 6, 8, 10, 12 etc., especially if used for a LED module arrangement.

Preferably a connector of the LED modules must be arrangeable such that the position of the connector of the first and second LED module fits to the position of the plug-in connectors of the control unit.

The object is also solved by a LED module arrangement comprising a cabinet configured to receive a first LED module according to one of the claims 1 to 5 and a second LED module according to one of the claims 1 to 5, the first LED module according to one of the claims 1 to 5 and the second LED module according to one of the claims 1 to 5, which are arranged symmetrically, especially mirror symmetrically, to each other on the cabinet, whereas the first LED module is arranged in a first orientation on the cabinet and the second LED module is arranged in a second orientation different from the first orientation on the cabinet, a control unit according to claim 6 connected to the connector of the first and second LED module.

The formulation a first and a second LED module within this application does not restrict the claim to the presence of only one first and only one second LED module. It is especially used to differentiate between a LED module and another LED module. However, such formulation has to be understood as at least one first module and at least one second module.

Such a LED module arrangement can be built from identical modules. LED modules shall be considered identical when the modules arranged in the same orientation comprise the same components and the same arrangements of the components, especially the position of the connector to be connected to the control unit.

An LED arrangement built in such way is easy to configure and does not need manual intervention for configuration, which means that such arrangement can be built faster and cheaper. Only one kind of LED module is needed to built such LED module arrangement.

The cabinet is a support on which the first LED module and a second LED module can be arranged. Dependent on the size of the cabinet, a plurality of first and a plurality of second LED modules can be placed on the cabinet. E.g. an LED module arrangement can comprise two rows whereas in a first row all LED modules or oriented in a first direction and in the second row all LED modules are oriented in a second direction, which is especially turned 180° to the first direction. The lines of such arrays can comprise 1, 2, 3, 4, 5, 6... to n, whereas n is number of the last line arranged on the cabinet. Typically, a cabinet is used allowing an arrangement of 2 rows and 2 lines, i.e. a 2x2 arrangement, or a 2 rows and 3 lines, i.e. a 2x3 arrangement, of the LED modules.

The difference between the first orientation of the first LED module and the second orientation of the second LED module can be in a preferred embodiment 180°.

In a further embodiment the cabinet of the LED module arrangement is configured to receive a first number of first LED modules, especially 2, and the same number of second LED modules, especially 2, whereas the number of first and second LED modules is arranged in a quadratic or rectangular shape, especially in a mirror-symmetrical way. Typically, the number of first LED modules forms a first row and the number of second LED modules forms a second row, whereas the number of first LED modules is arranged symmetrically to an axis running parallel and between the first and second row, whereas edges of the LED modules closest to the axis are oriented parallel to that axis. A 2x2 LED module configuration therefore forms a quadratic shape, 2x1, 2x3, 2x4 or 2xn, configuration forms a rectangular shape, whereas n is a natural number larger than 4. Such quadratic or rectangular shape is advantageous to built larger displays or lighting panels.

The object is also solved by method comprising the steps of: detecting an orientation of a LED module relative to a connector of a control unit by detecting an orientation parameter of the connector of the LED module relative to a connector of a control unit, loading a configuration setup for the detected orientation or a plurality of configuration setups for different orientations of LED modules, assigning a configuration setup to the LED module dependent on the detected orientation of the LED module and operating the LED module according to the configuration setup corresponding to its detected orientation.

In a further embodiment of the method the orientation parameter is detected by detecting a first energized pin and/or a second grounded pin associated with the orientation of the connector relative to the control unit. The first energized pin is be understood as a pin of the connector to which a voltage is applied. The second grounded pin is a pin of the connector which is electrically grounded.

In a preferred embodiment an executable program code exists comprising control commands, which - when executed - initiate the execution of the method according to claims 11 or 12.

The object is also solved by a method for assembling a LED module arrangement comprising a first LED module and a second LED module, whereas the second module is identical to the first LED module, especially whereas a cabinet of the LED module arrangement is configured to receive two rows of LED modules, adducting a first LED module according to one of the claims 1 to 5, arranging the first LED module, especially in a first row, on a cabinet in a first orientation such that the second LED module can be arranged mirror-symmetrically on the cabinet to the first LED module, adducting a second module according to one the claims 1 to 5, arranging the second LED module mirror-symmetrically in a second orientation, especially opposite to the first orientation, to the first LED module, especially in a second row, on the cabinet, especially whereas the first LED module and the second LED module are arranged mirror-symmetrically such that their connectors have a minimum distance, connecting the control unit according claim 6 or 7 to the connectors of the first and second LED module.

Especially the control unit comprises a least 4 connectors and is connected to at least 4 LED modules, whereas the LED modules are arranged mirror-symmetric to each other.

Assembling shall be understood in a broad sense and shall be not restricted to the physical assembling, but also comprises the digital assembling to create an operatable LED module arrangement.

In a further embodiment - as part of the digital assembling - the method comprises the steps of detecting the orientations of the first and second LED module relative to a connector of the control unit by detecting a orientation parameter of the connector of the first and second LED module by the control unit, loading a first and second configuration setup for the first and the second LED module dependent on the detected orientation, assigning the configuration setup to the first and the second LED module corresponding to the detected orientation of the first and second LED module, saving the made assignment for operation of the first and second LED module. By that the LED module arrangement is ready to be operated.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic representation of a LED module in a first orientation and in a second orientation,
Figure 2A shows an exemplary pin configuration for a connector of a LED module in a first orientation,
Figure 2B shows an exemplary pin configuration for a connector of a LED module in a second orientation,
Figure 3 shows an exemplary representation of a control unit positioned on a LED module arrangement from a backside view,
Figure 4 shows an exemplary perspective representation of a LED module arrangement from a front side
Figure 5 shows an exemplary LED module arrangement comprising a control unit,
Figure 6 shows a flowchart for an exemplary method for operating an LED module arrangement,
Figure 7 shows a flowchart for an exemplary method for assembling an LED module arrangement.

In the figures like reference signs denote like elements unless stated otherwise.

### DETAILED DESCRIPTION OF THE DRAWINGS

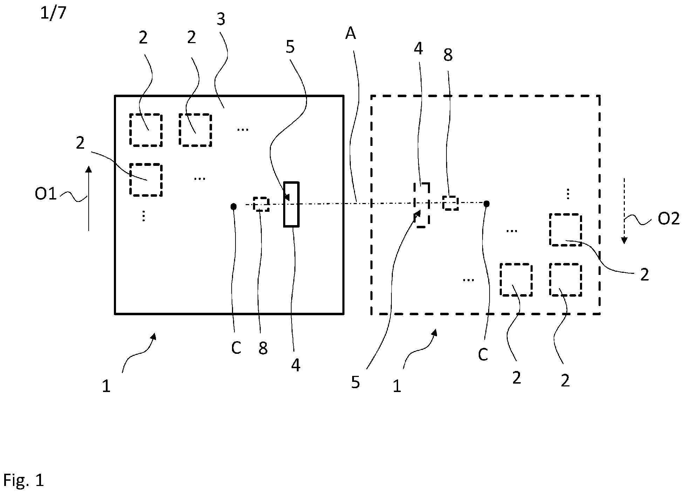

Figure 1 shows a schematic representation of a LED module 1 in a first orientation O1 in a continuous line representation and the same LED module 1 in a second orientation O2 in a dashed line representation. The LED module 1 is shown from a view on the backside of the LED module 1.

The LED module 1 comprises a plurality of LEDs 2 on the front side of the LED module 1, which are not directly visible and are therefore also shown with dashed lines. The LEDs 2 can be grouped by packages, whereas each LED package comprises a plurality of LEDs 2. The LEDs 2 or packages of LEDs 2 are embedded in a housing 3 comprised by the LED module 1. The LED module 1 further comprises a central axis C running through the center of the LED module 1 and or perpendicular to the sheet plane.

On the backside of the LED module 1 a connector 4 is positioned outside of a center axis vertical to the sheet plane, such axis not shown Fig 1, of the LED module 1. The LEDs 2 are connected with the connector 4 such that the LEDs 2 can be controlled via control signals received from the connector 4 from a control unit. The control unit is not shown in Fig. 1. The connection of the connector 4 with the LEDs 2 can by realized with a printed circuit board, abbreviated PCB, also not shown in Fig. 1.

The connector 4 is positioned symmetrically on a middle axis A cutting the LED module 1 in the middle orthogonal to the first orientation O1. This allows to rotate the LED module 1 from the first orientation O1 to a second orientation 02. If a first and a second LED module is used, these first and second LED module can be arranged mirror symmetrically to each other.

The connector 4 is male connector which can be connected to female connector of a control unit by plug-in connection. The connector 4 comprises a pin configuration 5 through which the orientation of the LED module 1 can be detected. The pin configuration 5 comprises a first pin to which a voltage is applied and second pin that is electrically grounded. For energizing the first pin a voltage source 8 is comprised by the LED module 1, placed in the inner part of the LED module 1, e.g. on the PCB, and is therefore not directly visible.

By turning the LED module 1 from a first orientation O1 to a second orientation O2 the connector 4 also changes its orientation accordingly. So, the positions of the first pin and the second pin are also changed by turning the LED module from orientation O1 to orientation O2, especially relative to the female plug connector of the control unit. The orientation of the female plug connector of the control unit has fix orientation relative to the control unit.

The connector of the LED module 1 and the connector of the control unit are configured such that the connector of the LED module 1 can be plug-in into the connector of the control unit in the first orientation O1 and in the second orientation O2. This change of position of the first pin and the second pin can be detected by the control unit or by manual measurement. Therefrom the first orientation O1 and the second orientation O2 of the LED module 1 can be derived.

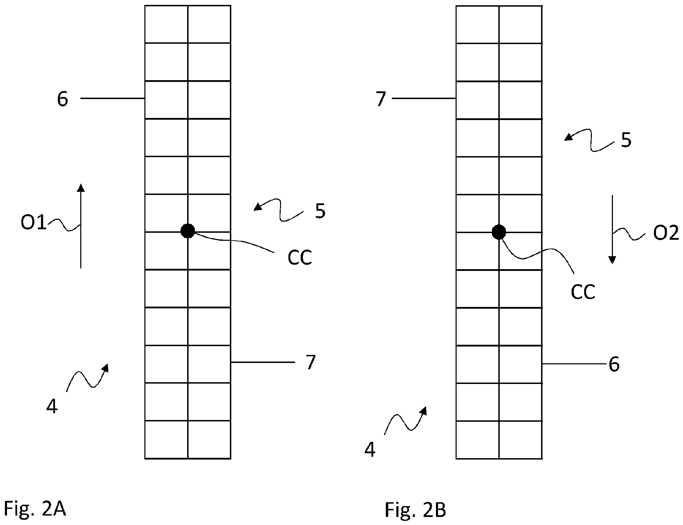

Fig. 2A shows a pin configuration 5 of a connector 4 in a first orientation O1 and Fig 2B shows the pin configuration 5 of the same connector 4 in a second orientation O2. Fig 2A and 2B are described together.

By the pin configuration 5 it is possible to the detect the orientation of the connector 4 via a connector of a control unit, not shown. The pin configuration 5 comprises pins with different functions, e.g. voltage pins, generic clock pins, data clock pins, several data pins, groundings, etc., necessary to control the LED module, especially as part of a LED module arrangement comprising several LED modules. The pins are represented by shown boxes. Typically, a connector 4 can have 16 pins in each row, whereas the connector comprises 2 rows of pins.

The pin configuration 5 comprises at least a first pin 6, which is an energized pin, providing a logic high signal and a second pin 7, which is electrically grounded providing a logic low signal. The first pin 6, which can also be named as rotation pin, and the second pin 7 are arranged point symmetrically to a connector center CC.

This point symmetric arrangement of the first pin 6 and the second pin 7 allows to differentiate between the connector being in a first orientation O1 or in a second orientation O2. In addition, the connector of the control unit fits into the connector 4 of the LED module independent of the orientation of the connector 4.

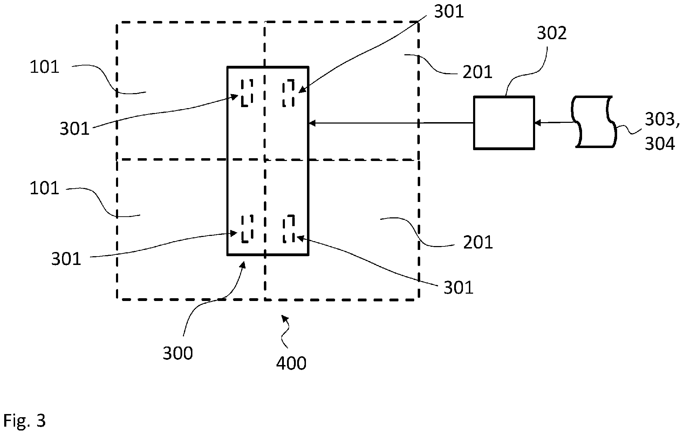

Figure 3 shows an exemplary representation of a control unit 300 positioned on a LED module arrangement 400 from a backside view. The LED module arrangement 400 is shown as dashed line, whereas the control unit 300 represented by continuing lines.

The control unit 300 is configured to connect with its connectors 301, especially female connectors, to two first LED modules 101, each with a connector not shown in Fig. 3, and to two second LED modules 201, each with a connector not shown in Fig. 3. The control unit 300 comprises therefore four plug-in connectors 301 which are plugged into the connectors of the first LED modules 101 and second LED modules 102. The connectors of the first LED modules 101 and second LED modules 102 are not shown in Fig. 3, however their positioned from back view is congruent with the position of the connectors 301 of the control unit 300. The four plug-in connectors 301 of the control unit 300 have a certain fix spatial distribution adapted to the layout of the used LED module and LED module arrangement, such that the control unit can connect to all connectors of the LED first and second LED modules 101 and 102 of a LED module arrangement 400.

The control unit 300 can comprise a hub board comprising ethernet interfaces, power terminal interfaces for power supply, and a hub card. The control unit 300 has access to memory 302, in which control programs can be stored. Especially a first configuration setup 303 for a LED module in a first orientation is stored in the memory 302 and a second configuration 304 setup for a LED module in second orientation is stored. These first and second configuration setups allow to operate the LED modules in such way that a given image, video or light pattern is shown on the LED arrangement taking into account the orientation of the respective LED module.

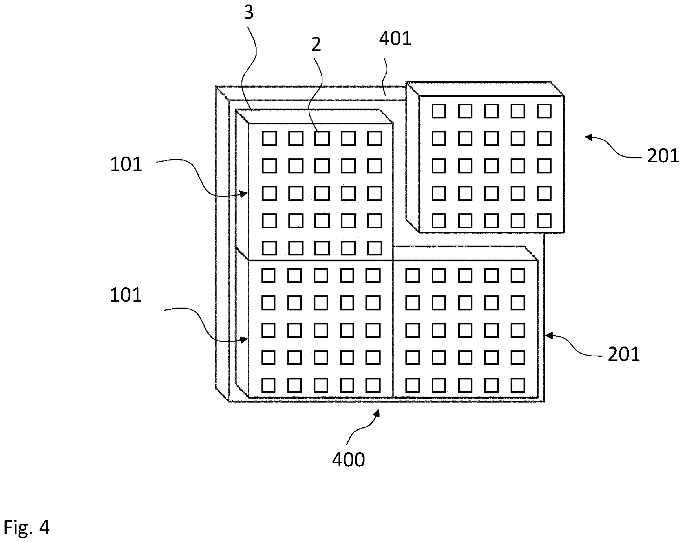

Fig. 4 shows an exemplary perspective representation of a LED module arrangement 400 from a front side. The LED module arrangement 400 comprises a cabinet 401 on which the LED modules are arranged. The LED module arrangement 400 comprises two rows and two lines. Two first LED modules 101 having a first orientation are arranged in the first row, two second LED modules 201 having a second orientation are arranged in second row on the cabinet 401. Each first LED module 101 and each second LED module 201 comprise a housing 3 and a plurality of controllable LEDs 2.

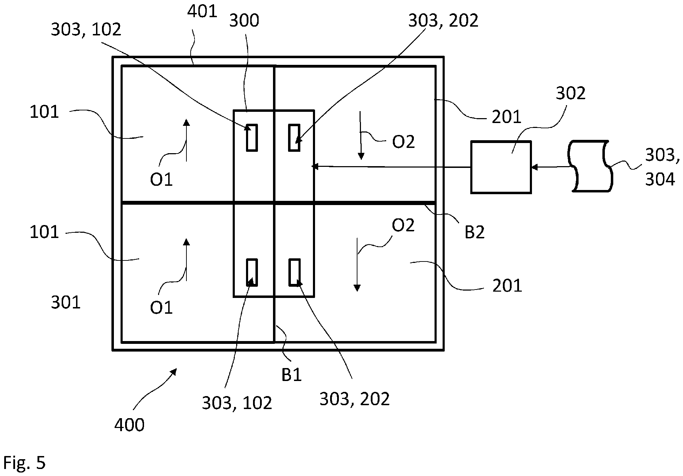

Fig. 5 shows a schematic LED arrangement 400 from a backside view, comprising a cabinet 401 and two first LED modules 101 and two second LED modules 201. The LED arrangement 400 is exemplary and can comprise also three, four or more first LED modules and three, four or more second LED modules 201. The cabinet 401 is configured to receive and arrange such rows and lines of LED modules.

The first LED module 101 and the second module 201 are identical in terms of components and component arrangements. This means the first LED module 101 and the second LED module 102 are - when put in the same orientation - are technically not distinguishable. The LED module 101 is configured such, that a first LED module 101 and a second LED module 201 can be arranged in a first and in a second row, mirror-symmetrically to each other on the cabinet 401.

The first LED module 101 comprises a connector, referred to as first connector 102. The second LED also module comprises a connector, referred to as second connector 202.

The first LED modules 101 are arranged in a first orientation O1 on the cabinet 401. The second LED modules 201 are arranged in a second orientation O2 which deviates from orientation O1 by 180°.

The used LED modules to build the LED module arrangement 400 is further configured such that a first LED module 101 and second LED module 201 in a first line on the cabinet can be arranged mirror-symmetrically to a first LED module 101 and a second LED module 201 arranged in a second line. I.e. the LED modules are arranged symmetrically on the cabinet 401 relative to the first middle axis B1 as well as to the second middle axis B2. In other words, the LED modules are arranged mirror-symmetrically on the cabinet 401 via axis B1 and axis B2. The middle axis B1 and B2 can also be considered as mounting axes.

The LED module arrangement 400 also comprises a control unit 300. The control unit 300 comprises a plurality of plug-in connectors 301, especially female connectors, which are positioned such that all four plug-connectors 301 can be plugged into the connectors of the first LED modules 101 and the second LED modules 201 when arranged on the cabinet 401.

This means the control unit 300 and the used LED modules are adapted such to each other that a direct connection can be established by the connectors of all LED modules and the plug-in connectors 301 of the control unit, when the given number of LED modules is arranged on the cabinet 401, here four.

The control unit 300 comprises executable program code comprising control commands configured to detect the orientation of each LED module by detecting the position of the first pin and second pin in the connector of the LED module. It is further configured to assign a first configuration setup 303 for a first orientation O1 of a LED module and a second configuration setup 304 for a second orientation O2 to a LED module dependent on the detected orientation of the LED module. Further it is configured to operate the LED module according to the assigned configuration setup.

In the presented embodiment the control unit 300 assigns the first configuration setup 303 for the first orientation O1 to the first LED modules 101 and the assigns the second configuration setup 304 for the second orientation O2 to the second LED modules 201.

The executable program code can be stored in a memory 302, which can be comprised be the control unit 300 or can be external to the control unit 300. The control unit 300 can load the configuration setups 303, 304 before or after the detection of the orientation of the LED modules takes place.

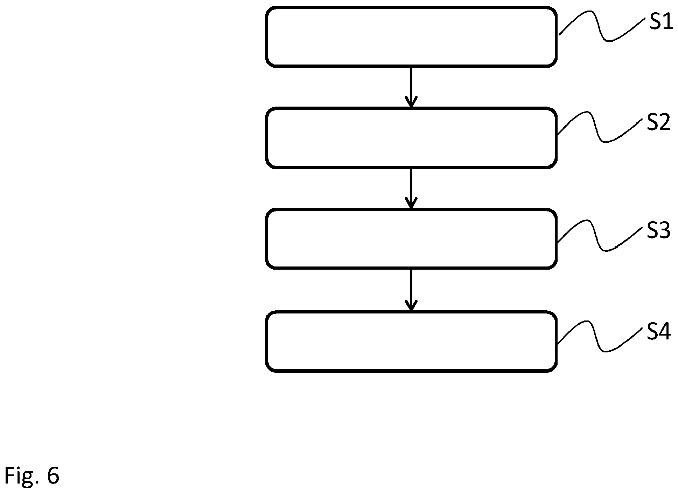

Figure 6 shows flow chart of a method for operating a LED module. Such method can be initiated by executable program code, which - when executed - performs the respective method, especially according claims 11 and 12. The method is explained for a LED module arrangement according to Fig. 5.

The method can be executed serially or in parallel for each first or second LED module. Alternatively, the method can be executed only for one first LED module and one second LED module of different rows and the other LED modules of the same row can be operated with the same respective configuration setup.

In a first step S1 an orientation parameter of the connector of a LED module is detected by the control unit. This is realized by detecting the position of the first pin and the second pin comprised by the connector for each LED module relative to the control unit. This orientation information for a specific LED module is stored in memory, e.g. comprised by a control unit.

In second step S2 a configuration setup is loaded based on the determined orientation of the specific LED module. Alternatively a number of different configuration setups can be loaded in parallel to the step S1 independent of a detected orientation.

In third step S3 a configuration setup corresponding with the detected orientation of the LED module is assigned to the LED module. So, it is defined that the LED module has to be operated in e.g. an upward or downward orientation.

In fourth step S4 the LED module is operated with the configuration setup assigned to the specific LED module. So e.g. a large display can be realized with a plurality of LED modules arranged in upward and downward orientation and the content of the large display is still displayed correctly as the control unit takes in account the different orientations of the LED modules.

The method can be performed automatically when an LED arrangement is switched on.

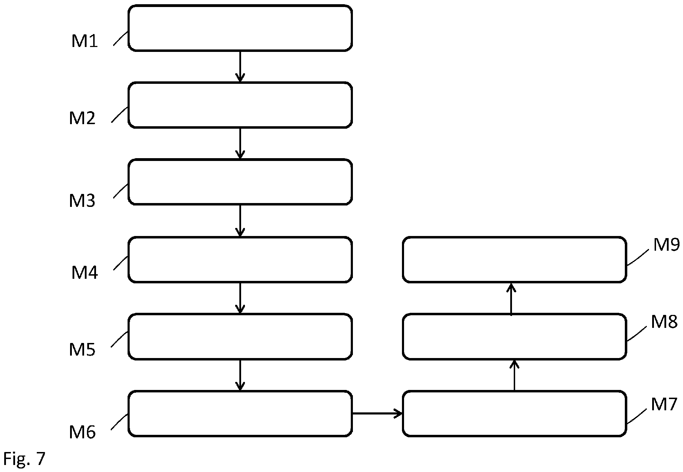

Figure 7 shows a flowchart for a method for assembling a LED module arrangement. Assembling has to be understood broadly and comprises also the electronic initiation of the LED arrangement.

In first step M1 a first LED module is adducted and arranged in a second step M2 on a cabinet comprised by the LED arrangement. The arrangement takes into account the configuration of the cabinet. The cabinet can be designed for receiving a different numbers of LED modules, e.g. 2, 4, 6, 8, etc. LED modules. The connector of the first LED module is positioned close to one of the middle axes, in Fig.5 identified as B1 or B2, especially such that a second LED module can be arranged mirror-symmetrically on the cabinet to the first LED module.

The cabinet can be filled line by line with LED modules or in row by row. The cabinet can also be filled arbitrarily with LED modules in different given lines and rows. E.g. a plurality of first LED modules oriented the same way can be placed in a row on the cabinet. In this embodiment first and second modules are arranged alternatingly.

In a next step M3 a second LED module is adducted and arranged in a step M4 mirror-symmetrically on the cabinet relative to first module.

The steps M1 to M4 can be repeated until the cabinet is filled with LED modules. After the cabinet is completely filled with LED modules, e.g. according to Fig 5 with 4 LED modules. After the cabinet is filled with LED modules the control unit is positioned on the backside of the LED modules and directly connected to all four connectors for the first and second LED modules in step M5. After connecting the control unit, the physical assembling can be considered as finalized.

In the next steps a continued digital assembling is described. After the control unit is connected to all LED modules present on the cabinet, the orientation of each LED module is detected by the control unit in a step M6. For this at least the control unit is powered. This can take place in parallel for all LED modules to which the control unit is connected.

In a step M7 the control unit loads a first and a second configuration setup. The first configuration setup is a setup for operating the LED module in a first orientation. The second configuration setup is a setup to operate a LED module in a second orientation. After the configuration setups are loaded, the configuration setups are assigned to each LED module corresponding to the detected orientation of the LED module in a step M8. The assigned configuration setup for each LED module is saved in a step M9 and can be accessed by the control unit when required. With this last step the LED arrangement is ready to be operated by the control unit and the assembling can be considered finalized.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present disclosure provides a LED module (1) comprising a plurality of LEDs (2) and a housing (3) for the LEDs (2), further comprising a connector (4) configured to receive control signals from a control unit (300) to control the LEDs (2), whereas the connector (4) is connected to the LEDs (2) such that the received control signals are executable by the LEDs, whereas the LED module (1) comprises means (5, 6, 7, 8) to detect an orientation (O1, O2) of the LED module (1), whereas the LED module (1) is configured to be operated dependent on the orientation (O1, O2) of the LED module (1), whereas the means (5, 6, 7, 8) to detect the orientation (01,02) of the LED module (1) are comprised by the connector (4).

### LIST OF REFERENCE SIGNS

1 LED module
2 LED
3 housing
4 connector of a LED module, male connector
5 pin configuration comprised by first connector to detect orientation of the first LED module
6 first pin of first connector
7 second pin of first connector
8 voltage source
101 LED module, first
102 connector of first LED module, male connector
201 LED module, second
202 connector of second LED module
300 Control unit
301 Connector of control unit: female connector
302 Memory
303 first configuration setup for first orientation
304 second configuration setup for second orientation
400 LED module arrangement
401 Cabinet
S1 detecting an orientation parameter of the connector
S2 loading a configuration setup for the LED module corresponding to its orientation
S3 assigning the configuration setup to the LED module based on the detected orientation for the LED module
S4 operating the LED module with the configuration setup according to its detected orientation.
M1 adducting a first LED module
M2 arranging the first LED module on the cabinet
M3 adducting a second module
M4 adducting a second module mirror symmetrically to the first module on the cabinet
M5 connecting the first and second module to the control unit
M6 detecting a orientation of the first and second module
M7 loading a first and a second configuration setup
M8 assigning a configuration setup to a first and second LED module
M9 saving the assigned configuration
O1 orientation, first
O2 orientation, second
CC connector center
B1 middle axis cabinet, first
B2 middle axis cabinet, second
C center axis LED module

## Claims

1. LED module (1) comprising a plurality of LEDs (2) and a housing (3) for the LEDs (2), further comprising a connector (4) configured to receive control signals from a control unit (300) to control the LEDs (2), whereas the connector (4) is connected to the LEDs (2) such that the received control signals are executable by the LEDs, whereas the LED module (1) comprises means (5, 6, 7, 8) to detect an orientation (O1, O2) of the LED module (1), whereas the LED module (1) is configured to be operated dependent on the orientation (O1, O2) of the LED module (1), whereas the means (5, 6, 7, 8) to detect the orientation (01,02) of the LED module (1) are comprised by the connector (4).

2. LED module according to claim 1,
whereas the connector (4) comprises as means (5, 6, 7, 8) to detect the orientation (O1, O2) a pin configuration (5) configured to represent an orientation (O1, O2) of the LED module (1), especially by a control unit (300) connectable to the connector (4).

3. LED module according to claim 2,
whereas the pin configuration (5) comprises a first pin (6) and a second pin (7), whereas the first and the second pin (6, 7) are arranged point symmetric to a center (CC) of the connector (4), whereas the first pin (6) and the second pin (7) are configured to be, especially electrically, distinguishable by the control unit (300).

4. LED module according to claim 3,
whereas the LED module (1) comprises a voltage source (8), whereas the voltage source (8) is electrically connected to the first pin (6) and whereas the second pin (7) is electrically grounded.

5. LED module according to one of the preceding claims,
whereas the connector (4) of the LED module (1) is placed such on the LED module (1) that by turning the LED (1) module from a first orientation (O1) to a second orientation (O2) which is the first orientation (O1) plus 180°, whereas the turning takes place around an a center axis (C) parallel to a light emitting direction of the LED module (1), the position of the connector (4) in the first orientation (O1) and in the second orientation (O2) can be arranged mirror symmetrically.

6. Control unit (300) for a LED module (1),
- whereas the control unit (300) is configured to detect a orientation (O1, O2) of the LED module (1) according to one of the claims 1 to 5, by detecting an orientation parameter of the connector (4) of the LED module (1),
- whereas the control unit (300) is configured to load a first configuration setup (303) for a LED module (1) arranged in a first orientation (O1) and to load a second configuration setup (304) for a LED module (1) arranged in a second orientation (O2),
- whereas the control unit (300) is configured to assign the first or second configuration setup (303, 304) to the LED module (1) according to the detected orientation (O1, O2) of the LED module (1),
- whereas the control unit (300) is configured to operate the LED module (1) according to the assigned configuration setup (303, 304) dependent on the detected orientation of the LED module (1).

7. Control unit according to claim 6,
whereas the control unit (300) comprises a plug-in connector (301), especially a first plug-in connector and second plug-in connector, which is directly connectable to a connector (4) of the LED module (1), especially to the connector (4, 102) of the first LED module (101) and to the connector (4, 202) of the second LED module (201).

8. LED module arrangement (400) comprising
- a cabinet (401) configured to receive a first LED module (101) according to one of the claims 1 to 5 and a second LED module (201) according to one of the claims 1 to 5,
- the first LED module (101) according to one of the claims 1 to 5 and the second LED module (201) according to one of the claims 1 to 5, which are arranged symmetrically, especially mirror symmetrically, to each other on the cabinet (401), whereas the first LED module (101) is arranged in a first orientation (O1) on the cabinet (401) and the second LED module (201) is arranged in a second orientation (O2) different from the first orientation (O1) on the cabinet (401),
- a control unit (300) according to claim 6 or claim 7 connected to the connector (4) of the first and second LED module (101, 201).

9. LED arrangement according to claim 8,
whereas as the difference between the first orientation (O1) of the first LED module (101) and the second orientation (O2) of the second LED module (201) is 180°.

10. LED arrangement according to claim 8 or 9,
whereas the cabinet (401) is configured to receive a first number of first LED modules (101), especially 2, and the same number of second LED modules (201), especially 2, whereas the number of first and second LED modules (101, 201) is arranged in a quadratic or rectangular shape.

11. Method for operating a LED module,
- detecting (S1) an orientation of a LED module (1) relative to a connector (301) of a control unit (300) by detecting an orientation parameter of the connector (4) of the LED module (1) relative to a connector (301) of a control unit (300),
- loading (S2) a configuration setup (303, 304) for the detected orientation (O1, O2) or a plurality of configuration setups (303, 304) for different orientations (O1, O2) of LED modules (1),
- assigning (S3) a configuration setup (303, 304) to the LED module (1) dependent on the detected orientation (01, 02) of the LED module (1) and
- operating (S4) the LED module (1) according to the configuration setup (303, 304) corresponding to its detected orientation (O1, O2).

12. Method according to claim 11,
detecting (S1) as orientation parameter a first energized pin (6) and/or a second grounded pin (7) associated with the orientation (01, 02) of the connector (4) relative to the control unit (300).

13. Method for assembling a LED module (400) arrangement comprising a first LED module (101) and a second LED module (201), whereas the second LED module (201) is identical to the first LED module (101), especially whereas a cabinet (401) of the LED module arrangement (400) is configured to receive two rows of LED modules (1),
- adducting (M1) a first LED module (101) according to one of the claims 1 to 5,
- arranging (M2) the first LED module (101), especially in a first row, on a cabinet (401) in a first orientation (O1) such that the second LED module (201) can be arranged mirror-symmetrically on the cabinet (401) to the first LED module (101),
- adducting (M3) a second module (201) according to one the claims 1 to 5,
- arranging (M4) the second LED module (201) mirror-symmetrically in a second orientation (O2) to the first LED module (101), especially in a second row, on the cabinet (401),
- connecting (M5) the control unit (300) according to the claims 6 or 7 to the connector (4) of the first and second LED module (101, 102).

14. Method according to claim 13,
- detecting (M6) the orientations of the first and second LED module (101, 201) relative to a connector (301) of the control unit (300) by detecting a orientation parameter of the connector (4) of the first and second LED module (101, 201) by the control unit (300), and
- loading (M7) a first and second configuration setup (303, 304), especially dependent on the detected orientation of the first and second LED module (101, 201),
- assigning (M8) the first and second configuration setup (303, 304) to the first and the second LED module (101, 201) corresponding to the detected orientation (O1, O2) of the first and second LED module (101, 201),
- saving (M9) the made assignment for operation of the first and second LED module (101, 201), especially to a non-volatile memory (302).
